# EUROPÄISCHE PATENTANMELDUNG

(11) **EP 2 180 392 A1**
(43) Veröffentlichungstag der Anmeldung: **28.04.2010**
(21) Anmeldenummer: 08018466.6
(22) Anmeldetag: 22.10.2008
(51) Int. Cl.: G05F 1/46, H02J 3/38

(54) **Elektrische Spannungsversorgung**

(71) Anmelder: Micronas GmbH, 79108 Freiburg i. Br. (DE)
(72) Erfinder: Erdler, Gilbert, Dr., 79100 Freiburg (DE); Kuhl, Matthias, M.Sc, 79108 Freiburg (DE); Manoli, Yiannos, Prof., Dr.-Ing, 79104 Freiburg (DE); Müller, Claas, Dr., 79104 Freiburg (DE)
(74) Vertreter: Huwer, Andreas

(57) **Zusammenfassung**

Eine Spannungsversorgung (1) hat mehrere Spannungsquellen (2a, 2b, 2c), um Ausgangsanschlüsse (3a, 3b) zu speisen. Zum Regeln der Ausgangsspannung (Uₒᵤₜ) an den Ausgangsanschlüssen (3a, 3b) ist eine Regelschaltung vorgesehen, die für jede Spannungsquelle (2a, 2b, 2c) jeweils ein Stellglied aufweist, das einen Strompfad hat, über den ein Anschluss der betreffenden Spannungsquelle (2a, 2b, 2c) mit einem Ausgangsanschluss verbindbar ist. Jedes Stellglied hat einen Stellsignaleingang zum Einstellen der elektrischen Leitfähigkeit seines Strompfads. Die Regelschaltung hat einen Regler, dem die Ausgangsspannung (Uₒᵤₜ) und ein Sollspannungssignal zugeführt werden. Beim Auftreten einer Abweichung zwischen der Ausgangsspannung und dem Sollspannungssignal wirkt der Regler im Sinne einer Reduzierung der Abweichung mit mindestens einem Stellsignaleingang zusammen. Die Stellsignaleingänge sind mit einer Ansteuereinrichtung verbunden, die derart ausgestaltet ist,
- dass der Strompfad mindestens eines Stellglieds für die Ansteuerung durch den Regler freigegeben ist, wenn der an den Ausgangsanschlüssen (3a, 3b) entnommene Ausgangsstrom (I) in einem vorbestimmten, dem betreffenden Stellglied zugeordneten Wertebereich liegt, und
- dass der Strompfad gesperrt ist, wenn der an den Ausgangsanschlüssen (3a, 3b) entnommene Ausgangsstrom (I) nicht in dem vorbestimmten Wertebereich liegt.

## Beschreibung

Die Erfindung betrifft eine elektrische Spannungsversorgung zum Bereitstellen einer geregelten Ausgangsspannung.

Aus Gabriel A Rincon-Mora et al., "A Low-Voltage, Low Quiescent Current, Low Drop-Out Regulator", IEEE Journal of Solid-State Circuits, Vol. 33, No. 1, Jan. 1998 ist eine Spannungsversorgung der eingangs genannten Art bekannt, die eine Spannungsquelle aufweist, deren Ausgangspannung vom Laststrom unabhängig ist. Der Spannungsquelle ist eine Regelschaltung zugeordnet, die als Stellglied einen Feldeffekttransistor aufweist, über dessen Source-Drain-Strecke ein erster Anschluss der Spannungsquelle mit einem ersten Ausgangsanschluss der Spannungsversorgung verbunden ist. Ein zweiter Anschluss der Spannungsquelle ist mit einem zweiten Ausgangsanschluss der Spannungsversorgung verbunden. An den Ausgangsanschlüssen der Spannungsversorgung ist ein elektrischer Verbraucher anschließbar. Das Gate des Feldeffekttransistors ist mit einem Stellsignalausgang eines als Regler dienenden Operationsverstärkers verbunden. Ein nicht invertierender Eingang des Operationsverstärkers ist über einen Spannungsteiler mit der an den Ausgangsanschlüssen anliegenden Ausgangsspannung verbunden und an einem invertierenden Eingang des Operationsverstärkers liegt ein Sollspannungssignal an. Beim Auftreten einer Abweichung zwischen der Ausgangsspannung und dem Sollspannungssignal verändert der Operationsverstärker die zwischen dem Gate und der Source des Feldeffekttransistors anliegende Gatespannung derart, dass die Abweichung reduziert wird. Da der Feldeffekttransistor über die Gate-Source-Spannung angesteuert und die Source mit einem Ausgangsanschluss der Spannungsversorgung verbunden ist, ist eine Regelung der Ausgangsspannung auch dann möglich, wenn die Ausgangsspannung der Spannungsquelle nur etwas größer ist als die am Verbraucher anliegende Ausgangsspannung der Spannungsversorgung. Dadurch tritt bei einer Stromentnahme an den Ausgangsanschlüssen nur eine geringe Verlustleistung am Feldeffekttransistor auf Dies ist insbesondere bei tragbaren elektronischen Geräten vorteilhaft, bei denen als Spannungsquelle eine Batterie oder ein Akku dient. Ungünstig ist jedoch, dass bei einer Stromentnahme aus der Spannungsversorgung außer am Feldeffekttransistor auch an dem stets vorhandenen Innenwiderstand der Spannungsquelle ein Spannungsabfall auftritt. Die Spannungsquelle sollte deshalb derart dimensioniert werden, dass ihre Quellenspannung bei maximaler Stromentnahme geringfügig über der gewünschten Ausgangsspannung liegt. Bei geringer Stromentnahme resultiert daraus jedoch ein geringer Spannungsabfall am Innenwiderstand der Spannungsquelle. Um die Ausgangsspannung dennoch auf den gewünschten Wert zu regulieren, muss ein entsprechender Spannungsabfall am Feldeffekttransistor erzeugt werden, wodurch eine hohe Verlustleistung und damit ein geringer Wirkungsgrad erzielt wird. Eine direkte Reduzierung des Innenwiderstands durch Parallelschaltung mehrer zur Verfügung stehender Spannungsquellen und damit eine Erhöhung des Wirkungsgrades ist besonders dann nicht praktikabel, wenn die einzelnen Spannungsquellen unterschiedliche Eigenschaften aufweisen, wie zum Beispiel verschiedene Leerlaufspannungen, was zu Querströmen und damit zu Energieverlusten führt. Auch ist der Einsatz unterschiedlicher Spannungsquellen aus dem genannten Grund nicht praktikabel.

Aufgabe der Erfindung ist es daher, eine geregelte elektrische Spannungsversorgung zu schaffen, die einen hohen Wirkungsgrad in einem weiten Arbeitsbereich ermöglicht.

Diese Aufgabe wird gelöst durch eine elektrische Spannungsversorgung mit mindestens zwei Spannungsquellen zum Speisen von Ausgangsanschlüssen, mit einer Regelschaltung zum Regeln einer an den Ausgangsanschlüssen anliegenden Ausgangsspannung, wobei die Regelschaltung für jede Spannungsquelle jeweils ein Stellglied aufweist, das einen Strompfad hat, über den ein Anschluss der betreffenden Spannungsquelle mit einem Ausgangsanschluss verbindbar ist, wobei jedes Stellglied jeweils einen Stellsignaleingang zum Einstellen der elektrischen Leitfähigkeit seines Strompfads aufweist, wobei die Regelschaltung einen Regler hat, dem die Ausgangsspannung und ein Sollspannungssignal zugeführt werden, wobei der Regler derart mit den Stellsignaleingängen der Stellglieder zusammenwirkt, dass beim Auftreten einer Abweichung zwischen der Ausgangsspannung und dem Sollspannungssignal die Ansteuerung mindestens eines Stellsignaleingangs im Sinne einer Reduzierung der Abweichung verändert wird, und wobei die Stellsignaleingänge mit einer Ansteuereinrichtung verbunden sind, die derart ausgestaltet ist,
- dass der Strompfad mindestens eines Stellglieds für die Ansteuerung durch den Regler freigegeben ist, wenn der an den Ausgangsanschlüssen entnommene Ausgangsstrom in einem vorbestimmten, dem betreffenden Stellglied zugeordneten Wertebereich liegt, und
- dass der Strompfad gesperrt ist, wenn der an den Ausgangsanschlüssen entnommene Ausgangsstrom nicht in dem vorbestimmten Wertebereich liegt.

In vorteilhafter Weise hat die Spannungsversorgung also mehrere Spannungsquellen, die in Abhängigkeit von dem an den Ausgangsanschlüssen fließenden Ausgangstrom der Spannungsversorgung mit dem Ausgang der Spannungsversorgung verbunden oder von diesen getrennt sind. Dadurch ist es möglich, bei einem kleinen Ausgangsstrom diesen nur aus einer einzigen Spannungsquelle zu entnehmen. Die Ausgangsspannung dieser relativ stark belasteten Spannungsquelle muss durch das Stellglied lediglich leicht verringert werden, um die gewünschte Ausgangsspannung der Spannungsversorgung zu gewährleisten, was in einem hohen Wirkungsgrad resultiert. Wenn der Ausgangsstrom ansteigt und die Quellenspannung der betreffenden Spannungsquelle aufgrund deren Innenwiderstand unter einen vorbestimmten Wert abfällt, wird mindestens eine weitere Spannungsquelle mit dem Ausgang verbunden. Sobald der Ausgangsstrom abnimmt und wieder innerhalb des der zuerst genannten Spannungsquelle zugeordneten, vorbestimmten Wertebereich liegt, wird die Anzahl der mit dem Ausgang der Spannungsversorgung verbunden Spannungsquellen reduziert. Da alle Spannungsquellen über separate Stellglieder mit dem Ausgang der Spannungsversorgung verbunden sein können, und die Spannungen der einzelnen Spannungsquellen stets oberhalb der Ausgangsspannung liegen, kann kein Stromfluss zwischen den einzelnen Spannungsquellen entstehen. Die Spannungsversorgung ermöglicht es dadurch, die Spannungsquellen über einen weiten Ausgangsstrombereich jeweils in einem günstigen Arbeitspunkt zu betreiben und somit die an der Spannungsversorgung auftretende Verlustleistung entsprechend zu reduzieren, wobei Spannungsquellen beliebiger Bauart und/oder Güte miteinander kombiniert sein können, sofern deren Leerlaufspannung über der gewünschten Ausgangsspannung der Spannungsversorgung liegt.

Bei einer vorteilhaften Ausführungsform der Erfindung sind die Spannungsquellen Brennstoffzellen. Dabei ist es sogar möglich, dass die den einzelnen Stellgliedern zugeordneten Wertebereiche für den Ausgangsstrom der Spannungsversorgung derart gewählt sind, dass die Arbeitspunkte der Brennstoffzellen jeweils im linearen oder ohmschen Bereich ihrer Strom-Spannungskennline liegen.

Vorteilhaft ist, wenn die Stellglieder Feldeffekttransistoren sind, die jeweils mit ihrer Source mit einem Anschluss einer Spannungsquelle und mit ihrer Drain mit einem Ausgangsanschluss der Spannungsversorgung verbunden sind, wenn der Regler einen Operationsverstärker aufweist, der mit einem ersten Operationsverstärkereingang mit dem Ausgangsanschluss der Spannungsversorgung und mit einem zweiten Operationsverstärkereingang mit einem Geber für das Sollspannungssignal verbunden ist, und dass ein Ausgang des Operationsverstärkers über die Ansteuereinrichtung mit den die Stellsignaleingänge bildenden Gateanschlüssen der Feldeffekttransistoren verbindbar ist. Die Quellenspannungen der Spannungsquellen brauchen dann nur etwas größer zu sein als die Ausgangsspannung der Spannungsversorgung (Low-Drop-Längsregler).

Bei einer bevorzugten Ausgestaltung der Erfindung weist die Ansteuereinrichtung eine Schalteranordnung auf, die einen mit dem Ausgang des Operationsverstärkers verbundenen Eingang und mehrere Ausgänge aufweist, die jeweils mit einem Stellsignaleingang eines Stellglieds verbunden sind, wobei die Schalteranordnung einen Adresseingang hat, mittels dem der Eingang der Schalteranordnung durch Anlegen eines Adressierungssignals wahl- oder wechselweise mit jedem Ausgang der Schalteranordnung verbindbar ist, und wobei der Adresseingang mit einer Ansteuerlogik verbunden ist. Die Schalteranordnung kann dann kostengünstig mit Hilfe von Transistoren realisiert sein, die ggf. zusammen mit dem Regler, dem Geber für das Sollspannungssignal und/oder den Spannungsquellen in einen Halbleiterchip integriert sein können.

Vorteilhaft ist, wenn die Ansteuerlogik ein Schieberegister aufweist, das mit seinem Registerausgang mit dem Adresseingang der Schalteranordnung verbunden ist, wenn in dem Schieberegister zumindest eine der Anzahl der einzustellenden Zustände der Schalteranordnung entsprechende Anzahl Steuerwörter abgelegt ist, die für jeden zu sperrenden bzw. freizugebenden Strompfad jeweils zumindest ein Bit aufweisen, wenn das Schieberegister mindestens einen Steuereingang für ein Schiebetaktsignal aufweist, mittels dem die Steuerwörter nacheinander am Registerausgang ausgebbar sind, und wenn der mindestens eine Steuereingang mit einem Schiebetaktsignalgenerator verbunden ist, der derart mit dem Ausgang des Operationsverstärkers in Steuerverbindung steht, dass das am Registerausgang ausgegebene Steuerwort in Abhängigkeit von der Belastung der elektrischen Spannungsversorgung ausgewählt wird. Mit Hilfe des Schieberegisters können die einzelnen Schalter der Schalteranordnung auf einfache Weise angesteuert werden. Gegebenenfalls ist es sogar möglich, dass in dem Schieberegister mindestens zwei unterschiedliche Sätze mit Steuerwörtern abgelegt sind, und dass mittels einer Auswahleinrichtung jeweils einer dieser Sätze für die Ansteuerung der Schalteranordnung ausgewählt werden kann. Bei den einzelnen Sätzen mit Steuerwörtern kann dann jeweils in einem Bereich, in dem der Ausgangsstrom der Spannungsversorgung häufig und/oder lange angeordnet ist, unterschiedliche Spannungsquellen über die Stellglieder mit den Ausgangsanschlüssen verbunden sein. Die Umschaltung zwischen den Sätzen mit Steuerwörtern kann dann derart erfolgen, dass die einzelnen Spannungsquellen über eine längere Zeitdauer betrachtet etwa gleichmäßig entladen bzw. belastet werden.

Bei einer vorteilhaften Ausführungsform der Erfindung hat die Spannungsversorgung eine Messeinrichtung zur Erfassung eines von dem in dem Strompfad mindestens eines Stellglieds fließenden Quellenstroms abhängigen Messsignals, wobei der Schiebetaktsignalgenerator mindestens einen Komparator aufweist, der mit einem ersten Komparatoreingang mit einem Messsignalausgang der Messeinrichtung, mit einem zweiten Komparatoreingang mit einem Referenzsignalgeber und mit einem Komparatorausgang mit dem Steuereingang des Schieberegisters verbunden ist, und dass der Steuereingang des Schieberegisters flankengesteuert ist. Das Schieberegister kann dann durch Auswerten des Messsignals auf einfache Weise angesteuert werden.

Vorteilhaft ist, wenn der Messsignalausgang durch den Ausgang des Operationsverstärkers gebildet ist oder über einen Spannungsteiler mit diesem verbunden ist. Somit kann das am Ausgang des Operationsverstärkers anliegenden Stellsignal als Messsignal für die Ansteuerung des Komparators genutzt werden.

Bei einer anderen Ausführungsform der Erfindung weist die Messeinrichtung mindestens einen Strommesser zur Messung eines in dem Strompfad mindestens eines Stellglieds fließenden Stroms auf Die Messeinrichtung kann beispielsweise einen mit der betreffenden Spannungsquelle in Reihe geschalteten Shunt aufweisen.

Bei einer weiteren vorteilhaften Ausführungsform der Erfindung weist die Messeinrichtung mindestens einen Temperatursensor auf, der zur Messung der Temperatur einer Spannungsquelle ausgestaltet ist. Auch auf diese Weise kann das von dem mindestens einen Quellenstrom abhängige Messsignal verlustarm erfasst werden.

Es ist aber auch möglich, dass der Schiebetaktsignalgenerator mindestens einen Komparator aufweist, der mit einem ersten Komparatoreingang direkt oder indirekt vorzugsweise über einen Spannungsteiler mit einem der Ausgangsanschlüsse, mit einem zweiten Komparatoreingang mit einer Referenzspannungsquelle und mit einem Komparatorausgang mit dem Steuereingang des Schieberegisters verbunden ist, und dass der Steuereingang des Schieberegisters flankengesteuert ist. Dadurch kann eine dem Komparator vorgeschaltete Messeinrichtung eingespart werden.

Erwähnt werden soll noch, dass der erste Komparatoreingang auch mit einem externen Signal angesteuert werden kann, das beispielsweise von der an den Ausgangsanschlüssen der Spannungsversorgung entnommen Leistung oder dem Ausgangsstrom der Spannungsversorgung abhängig sein kann. Ein solches externes Signal kann zum Beispiel von einem an den Ausgangsanschlüssen angeschlossenen Verbraucher bereitgestellt werden.

Die Referenzspannungsquelle weist bevorzugt eine Verstelleinrichtung zum Einstellen der Referenzspannung auf Dadurch ist es möglich, die Ausgangsstrom-Wertebereiche, in denen die den Spannungsquellen zugeordneten Stellglieder für die Ansteuerung durch den Regler freigegeben sind, beispielsweise an die Anforderungen eines am Ausgang der Spannungsversorgung angeschlossenen Verbrauchers und/oder den Ladezustand der Spannungsquellen (z.B. Batterie oder Akku) anzupassen.

Nachfolgend sind Ausführungsbeispiele der Erfindung näher erläutert. Es zeigt:
- Fig. 1: ein Schaltbild eines ersten Ausführungsbeispiels einer geregelten elektrischen Spannungsversorgung,
- Fig. 2: eine graphische Darstellung des Ausgangstroms eines zweiten Ausführungsbeispiels der Spannungsversorgung, wobei auf der Abszisse die Zeit und auf der Ordinate der Ausgangstrom aufgetragen ist,
- Fig. 3: eine graphische Darstellung der Ausgangsspannung der Spannungsversorgung für den in Fig. 2 dargestellten Ausgangsstrom, wobei auf der Abszisse die Zeit und auf der Ordinate die Ausgangsspannung aufgetragen ist,
- Fig. 4: eine graphische Darstellung eines Stellsignals eines Spannungsreglers für den in Fig. 2 dargestellten Ausgangsstromverlauf, wobei auf der Abszisse die Zeit und auf der Ordinate das Stellsignal aufgetragen ist,
- Fig. 5: eine graphische Darstellung des Wirkungsgrads, den die Spannungsversorgung bei dem in Fig. 2 dargestellten Ausgangsstromverlauf aufweist, wobei auf der Abszisse die Zeit und auf der Ordinate der Wirkungsgrad aufgetragen ist, und
- Fig.6A bis 6D: graphische Darstellungen der Quellenspannungen von vier Spannungsquellen des zweiten Ausführungsbeispiels der Spannungsversorgung, wobei auf der Abszisse die Zeit und auf der Ordinate jeweils die Quellenspannung der entsprechenden Spannungsquelle aufgetragen ist.

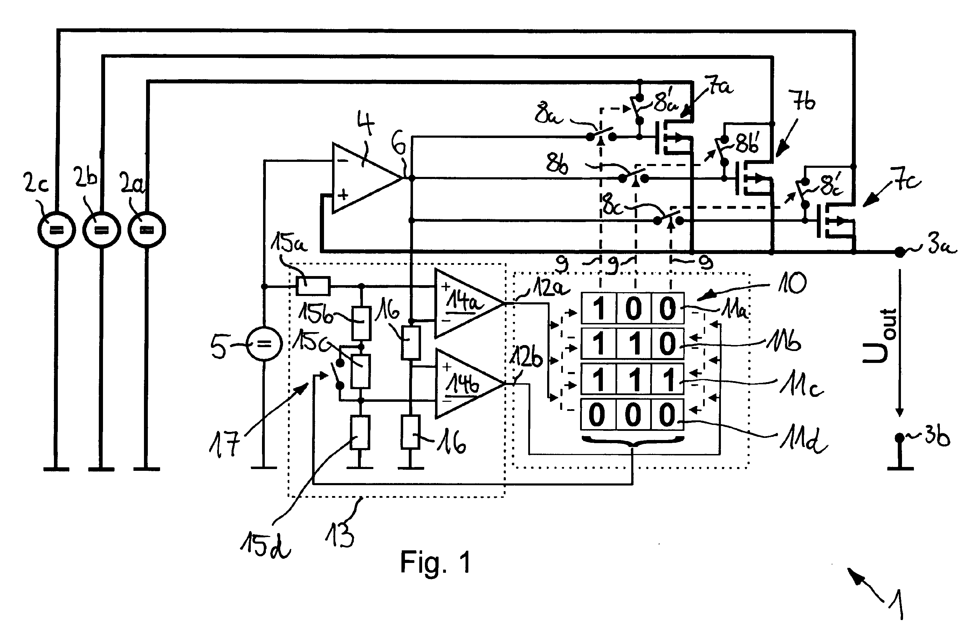

Ein erstes Ausführungsbeispiel einer in Fig. 1 im Ganzen mit 1 bezeichneten elektrischen Spannungsversorgung weist drei Spannungsquellen 2a, 2b, 2c auf, die mit Ausgangsanschlüssen 3a, 3b zum Anschließen eines in der Zeichnung nicht näher dargestellten Verbrauchers verbindbar sind. Die Quellenspannungen an den Anschlüssen der Spannungsquellen 2a, 2b, 2c sind vom Laststrom abhängig, mit dem die Spannungsquellen 2a, 2b, 2c beaufschlagt werden. Die Spannungsquellen 2a, 2b, 2c sind bevorzugt als Brennstoffzellen ausgestaltet, beispielsweise als PEM-Brennstoffzellen.

Zum Regeln einer an den Ausgangsanschlüssen 3a, 3b der Spannungsversorgung 1 anliegenden Ausgangsspannung Uₒᵤₜ hat die Spannungsversorgung 1 eine Regelschaltung, die einen P-Regler mit einem Operationsverstärker 4 aufweist. Ein nicht invertierender Eingang des Operationsverstärkers 4 ist mit einem ersten Ausgangsanschluss 3a der Spannungsversorgung 1 und ein invertierender Eingang des Operationsverstärkers 4 ist mit einem Geber 5 für ein Sollspannungssignal verbunden. Am Ausgang 6 des Operationsverstärkers 4 liegt eine Spannung an, die der Regelabweichung entspricht und proportional zu der Differenz zwischen der Ausgangsspannung Uₒᵤₜ und dem Sollspannungssignal ist.

Für jede Spannungsquelle 2a, 2b, 2c hat die Regelschaltung jeweils ein Stellglied, das durch einen Feldeffekttransistor 7a, 7b, 7c gebildet ist. Die Source jedes Feldeffekttransistors 7a, 7b, 7c ist jeweils mit einem ersten Anschluss der dem betreffenden Feldeffekttransistors 7a, 7b, 7c zugeordneten Spannungsquelle 2a, 2b, 2c verbunden. Ein zweiter Anschluss jeder Spannungsquelle 2a, 2b, 2c ist jeweils mit einem zweiten Ausgangsanschluss 3b der Spannungsversorgung 1 verbunden, der auf Massepotential liegt. Die Drain jedes Feldeffekttransistors 7a, 7b, 7c ist jeweils am ersten Ausgangsanschluss 3a der Spannungsversorgung 1 angeschlossen. Somit führt von jeder Spannungsquelle 2a, 2b, 2c jeweils ein Strompfad über eine Drain-Source-Strecke eines Feldeffekttransistors 7a, 7b, 7c zum ersten Ausgangsanschluss 3a.

Zum Verbinden des Ausgangs 6 des Operationsverstärkers 4 mit den als Stellsignaleingängen dienenden Gates der Feldeffekttransistoren 7a, 7b, 7c ist eine Ansteuereinrichtung vorgesehen, die eine Schalteranordnung umfasst, die für jeden Feldeffekttransistor 7a, 7b, 7c jeweils ein erstes Schaltelement 8a, 8b, 8c und ein zweites Schaltelement 8a', 8b', 8c' aufweist. Das erste Schaltelement 8a, 8b, 8c verbindet jeweils den Ausgangs 6 des Operationsverstärkers 4 mit dem Gate des betreffenden Feldeffekttransistors 7a, 7b, 7c. Das zweite Schaltelement 8a', 8b', 8c' verbindet jeweils das Gate des betreffenden Feldeffekttransistors 7a, 7b, 7c mit dessen Drain.

Der Operationsverstärker 4 wirkt über die Schalteranordnung derart mit den Gates der Feldeffekttransistoren 7a, 7b, 7c zusammen, dass beim Auftreten einer Abweichung zwischen der Ausgangsspannung Uₒᵤₜ und dem Sollspannungssignal die Ansteuerung mindestens eines Gates im Sinne einer Reduzierung der Abweichung verändert wird.

Die Schalteranordnung hat einen in der Zeichnung nur schematisch dargestellten Adresseingang 9, an den ein Adressierungssignal anlegbar ist, das die ersten Schaltelemente 8a, 8b, 8c und die zweiten Schaltelemente 8a', 8b', 8c' steuert. Wenn das erste Schaltelement 8a, 8b, 8c eines Feldeffekttransistors 7a, 7b, 7c geöffnet ist, ist jeweils das zweite Schaltelement 8a', 8b', 8c' des betreffenden Feldeffekttransistors 7a, 7b, 7c geschlossen. In entsprechender Weise ist jeweils das zweite Schaltelement 8a', 8b', 8c' eines Feldeffekttransistors 7a, 7b, 7c geöffnet, wenn das erste Schaltelement 8a, 8b, 8c dieses Feldeffekttransistors 7a, 7b, 7c geschlossen ist. Mit Hilfe des Adresseingangs 9 können die Gates der Feldeffekttransistoren 7a, 7b, 7c unabhängig voneinander mit dem Ausgang 6 des Operationsverstärkers verbunden oder von diesem getrennt werden. Wenn ein Gate von dem Ausgang 6 getrennt ist, ist die Drain-Source-Strecke des betreffenden Feldeffekttransistors 7a, 7b, 7c gesperrt.

Der Schalteranordnung ist eine Ansteuerlogik zugeordnet, die ein Schieberegister 10 aufweist. Das Schieberegister 10 hat einen Registerausgang, der mit dem Adresseingang 9 der Schalteranordnung verbunden ist. In dem Schieberegister 10 ist eine der Anzahl der einzustellenden Zustände der Schalteranordnung entsprechende Anzahl Steuerwörter abgelegt. Jedes Steuerwort hat jeweils eine der Anzahl der Feldeffekttransistoren 7a, 7b, 7c entsprechende Anzahl Bits, von denen jedes jeweils einem der Feldeffekttransistoren 7a, 7b, 7c zugeordnet ist.

Bei dem in Fig. 1 dargestellten Ausführungsbeispiel enthält das Schieberegister 10 vier Steuerwörter 11a, 11b, 11c, 11d, welche die Werte "000", "100", "110" und "111" aufweisen. Jeweils eines der im Schieberegister 10 gespeicherten Steuerwörter 11a, 11b, 11c, 11d wird an den Registerausgang des Schieberegisters 10 ausgegeben.

Wenn ein erstes Steuerwort 11a am Registerausgang anliegt, ist das Gate eines ersten Feldeffekttransistors 7a mit dem Ausgang 6 des Operationsverstärkers 4 verbunden und die übrigen Feldeffekttransistoren 7b, 7c sind gesperrt.

Wenn ein zweites Steuerwort 11b am Registerausgang anliegt, ist zusätzlich das Gate eines zweiten Feldeffekttransistors 7b mit dem Ausgang 6 des Operationsverstärkers 4 verbunden und nur ein dritter Feldeffekttransistor 7c ist gesperrt.

Wenn ein drittes Steuerwort 11c am Registerausgang anliegt, sind die Gates aller Feldeffekttransistoren 7a, 7b, 7c jeweils mit dem Ausgang 6 des Operationsverstärkers 4 verbunden.

Wenn ein viertes Steuerwort 11d am Registerausgang anliegt, sind alle Feldeffekttransistoren 7a, 7b, 7c unabhängig von dem am Ausgang des Operationsverstärkers 4 anliegenden Stellsignal gesperrt. Dann ist die Spannungsversorgung 1 abgeschaltet.

Ist das kapazitive Verhalten eines an die Spannungsversorgung angeschlossenen Verbrauchers ausgeprägt genug, ermöglicht der Wechsel von einem der Steuerwörter 11a, 11b und 11c zu dem Steuerwort 11d eine kurzzeitige Deaktivierung der Spannungsversorgung. Auf diese Weise können auch extrem kleine Ausgangsströme entnommen werden, wobei möglicherweise schädliche Einbrüche oder Spitzen der Ausgangsspannung unterbunden werden.

In Fig. 1 ist erkennbar, dass das Schieberegister 10 Steuereingänge 12a, 12b für ein Schiebetaktsignal aufweist, mittels dem die Steuerwörter nacheinander am Registerausgang ausgebbar sind. Die Steuereingänge 12a, 12b sind mit einem Schiebetaktsignalgenerator 13 verbunden, der einen ersten Komparator 14a und einen zweiten Komparator 14b aufweist.

Der erste Komparator 14a ist mit einem ersten Komparatoreingang mit dem Ausgang 6 des Operationsverstärkers 4 verbunden. Ein zweiter Komparatoreingang des ersten Komparators 14a ist über einen ersten Spannungsteiler mit dem Geber 5 für das Sollspannungssignal verbunden. Der erste Spannungsteiler hat einen ersten Widerstand 15a, einen zweiten Widerstand 15b, einen dritten Widerstand 15c und einen vierten Widerstand 15d, die in Reihe geschaltet sind. Der erste Widerstand 15a ist mit einem seiner Anschlüsse mit einem ersten Anschluss des Gebers 5 und der vierte Widerstand 15d ist mit einem seiner Anschlüsse mit einem zweiten Anschluss des Gebers 5 verbunden. Ein zwischen dem ersten Widerstand 15a und dem zweiten Widerstand 15b befindlicher erster Knoten ist am zweiten Komparatoreingang des ersten Komparators 14a angeschlossenen. Ein Komparatorausgang des ersten Komparators 14a ist mit einem ersten Steuereingang 12a des Schieberegisters 10 verbunden.

Der zweite Komparator 14b ist mit einem ersten Komparatoreingang über einen zweiten Spannungsteiler 16 mit dem Ausgang 6 des Operationsverstärkers 4 verbunden. Ein zweiter Komparatoreingang ist an einem zweiten Knoten angeschlossen, der den dritten Widerstand 15c und den vierten Widerstand 15d verbindet. Parallel zum dritten Widerstand 15c ist ein Überbrückungsschalter 17 angeordnet, mittels dem die Spannung am zweiten Komparatoreingang des zweiten Komparators 14b zwischen einem oberen und einem unteren Spannungswert umgeschaltet werden kann.

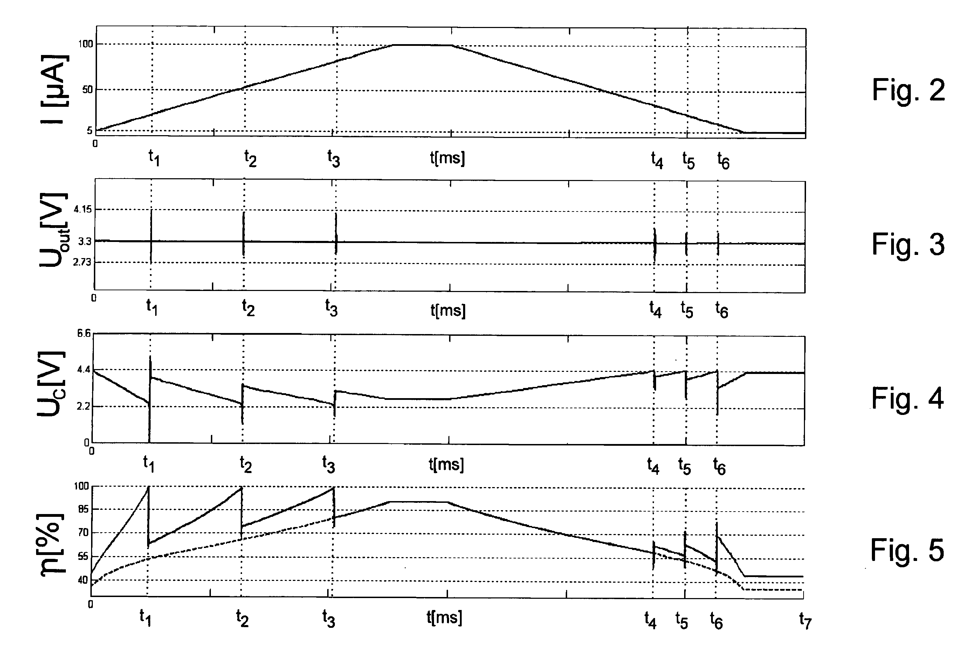

In Fig. 2 bis 6D sind elektrische Signale, die an einem zweiten Ausführungsbeispiel der Spannungsversorgung 1 während eines rampenförmigen Anstiegs bzw. Abfalls des Ausgangstroms I auftreten, grafisch dargestellt. Das zweite Ausfiährungsbeispiel hat zusätzlich zu den drei Spannungsquellen 2a, 2b, 2c und den drei Feldeffekttransistoren 7a, 7b, 7c ein vierte Spannungsquelle und einen vierten Feldeffekttransistor.

Wie in Fig. 2 und 3 erkennbar ist, bleibt die an den Ausgangsanschlüssen anliegende Ausgangsspannung Uₒᵤₜ beim Verändern des über die Ausgangsanschlüsse fließenden Ausgangstroms I bis auf kurze, beim Betätigen der Schalteinrichtung auftretende Schaltimpulse konstant.

In einem ersten Zeitintervall [0 .. t₁], in dem der Ausgangsfrom I klein ist, ist nur ein erster Feldeffekttransistor für die Ansteuerung durch den Operationsverstärker freigegeben. Die übrigen Feldeffekttransistoren sind gesperrt. In Fig. 4 ist erkennbar, dass die Ausgangsspannung U_{c} des Operationsverstärkers 4 mit linear ansteigendem Ausgangstrom I von einem ersten Spannungswert, der etwa 4,4 V beträgt, auf einen zweiten Spannungswert abfällt, der etwa 2,2 V beträgt. Dabei entspricht der zweite Spannungswert der Spannung am zweiten Komparatoreingang des zweiten Komparators.

Sobald die Ausgangsspannung U_{c} auf den zweiten Spannungswert abgefallen ist, wird am Beginn eines zweiten Zeitintervalls [t_{1 ··} t₂] ein zweiter Feldeffekttransistor für die Ansteuerung durch den Operationsverstärker freigegeben, um eine zweite Spannungsquelle mit dem ersten Ausgangsanschluss der Spannungsversorgung zu verbinden. Dadurch steigt die Ausgangsspannung U_{c} des Operationsverstärkers sprungartig an. Bedingt durch den weiteren Anstieg des Ausgangstroms I fällt die Ausgangsspannung U_{c} des Operationsverstärkers danach erneut ab.

Sobald die Ausgangsspannung U_{c} des Operationsverstärkers erneut auf den zweiten Spannungswert abgefallen ist, wird am Beginn eines dritten Zeitintervalls [t₂ .. t₃] ein dritter Feldeffekttransistor für die Ansteuerung durch den Operationsverstärker freigegeben, um eine dritte Spannungsquelle mit dem ersten Ausgangsanschluss der Spannungsversorgung zu verbinden. Dadurch steigt die Ausgangsspannung U_{c} des Operationsverstärkers wiederum sprungartig an, um danach aufgrund des weiter ansteigenden Ausgangstroms I erneut abzufallen.

Sobald die Ausgangsspannung U_{c} des Operationsverstärkers wiederum auf den zweiten Spannungswert abgefallen ist, wird am Beginn eines vierten Zeitintervalls [t₃ .. t₄] der vierte Feldeffekttransistor für die Ansteuerung durch den Operationsverstärker freigegeben, um die vierte Spannungsquelle mit dem ersten Ausgangsanschluss der Spannungsversorgung zu verbinden. Dadurch steigt die Ausgangsspannung U_{c} des Operationsverstärkers erneut sprungartig an, um danach aufgrund des weiter ansteigenden Ausgangstroms I auf einen zwischen dem ersten Spannungswert und dem zweiten Spannungswert befindlichen dritten Spannungswert abzufallen.

Nachdem der Ausgangstrom I einen Maximalwert erreicht hat, nimmt er linear auf seinen Ausgangswert ab. Dadurch steigt die Ausgangsspannung U_{c} des Operationsverstärkers 4 an, bis der erste Spannungswert erreicht ist. Dieser entspricht der Spannung, die am zweiten Komparatoreingang des ersten Komparators anliegt.

Sobald die Ausgangsspannung U_{c} des Operationsverstärkers den ersten Spannungswert erreicht hat, wird am Beginn eines fünften Zeitintervalls [t₄ .. t₅] der vierte Feldeffekttransistor gesperrt. Dadurch fällt die Ausgangsspannung U_{c} des Operationsverstärkers sprungartig auf einen Wert, der zwischen dem ersten und dem zweite Spannungswert liegt. Bedingt durch die weitere Reduzierung des Ausgangstroms I steigt die Ausgangsspannung U_{c} des Operationsverstärkers danach wieder an.

Sobald die Ausgangsspannung U_{c} des Operationsverstärkers erneut den ersten Spannungswert erreicht hat, wird am Beginn eines sechsten Zeitintervalls [t₅ .. t₆] der dritte Feldeffekttransistor gesperrt. Dadurch fällt die Ausgangsspannung U_{c} des Operationsverstärkers wiederum sprungartig ab, um danach aufgrund des weiter abnehmenden Ausgangstroms I erneut anzusteigen.

Sobald die Ausgangsspannung U_{c} des Operationsverstärkers erneut den ersten Spannungswert erreicht hat, wird am Beginn eines siebten Zeitintervalls [t₆ .. t₇] der zweite Feldeffekttransistor gesperrt. Dadurch fällt die Ausgangsspannung U_{c} des Operationsverstärkers wiederum sprungartig ab, um danach aufgrund des weiter abnehmenden Ausgangstroms I erneut anzusteigen.

In Fig. 5 ist erkennbar, dass der Wirkungsgrad η der Spannungsversorgung (durchgezogene Linie) in den Zeitintervallen [0 .. t₃] und [t₄ .. t₇], in denen nicht alle Spannungsquellen mit dem ersten Ausgangsanschluss der Spannungsversorgung verbunden sind, größer ist als der Wirkungsgrad einer entsprechenden Spannungsversorgung, bei der ständig alle Spannungsquellen am ersten Ausgangsanschluss angeschlossen sind (punktierte Linie).

Da die Höhe der Verlustleistung proportional zur Leitfähigkeit der Stellglieder ist, realisiert die Spannungsversorgung 1 eine Stabilisierung der Ausgangsspannung bei einer möglichst maximalen Leitfähigkeit der aktiven Stellglieder. Erst wenn der von den belasteten Spannungsquellen gelieferte Strom bei maximal geöffneten Stellgliedern nicht mehr geeignet ist, die Ausgangsspannung in geeigneter Weise zu stabilisieren, werden weitere Spannungsquellen 2a, 2b, 2c belastet, also deren Stellglieder geöffnet und die Leitfähigkeit aller aktiven Stellglieder auf ein angemessenes Maß reduziert. Bei einer gleichzeitigen Aktivierung aller Stellglieder ohne Volllast wäre somit die Verlustleistung an den Stellgliedern auf Grund ihrer verringerten Leitwerte erhöht im Vergleich zur dargestellten Spannungsversorgung 1.

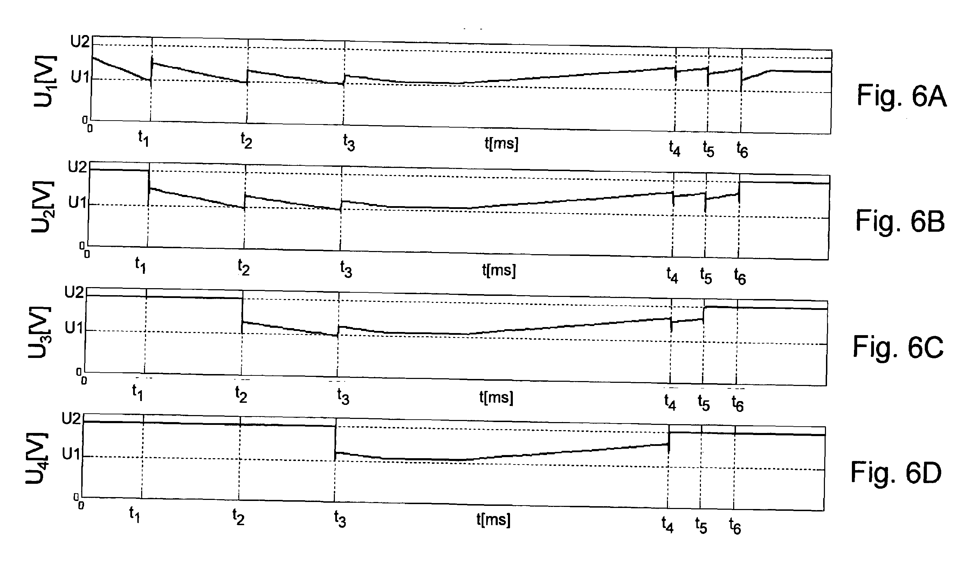

In Fig. 6A-6D ist im Zeitintervall [t₁ .. t₃] erkennbar, dass bei jedem Zuschalten einer Spannungsquelle die Quellenspannungen der Spannungsquellen, die unmittelbar vor dem Zuschaltzeitpunkt mit dem ersten Ausgangsanschluss der Spannungsversorgung verbunden waren, sprungartig ansteigen und dass die Quellenspannung der zugeschalteten Spannungsquelle jeweils sprungartig gegenüber ihrer Leerlaufspannung abfällt.

Im Zeitintervall [t₄ .. t₆] ist ferner erkennbar, dass bei jedem Abschalten einer Spannungsquelle die Quellenspannungen der Spannungsquellen, die unmittelbar vor dem Abschaltzeitpunkt mit dem ersten Ausgangsanschluss der Spannungsversorgung verbunden waren, sprungartig abfallen und dass die Quellenspannung der abgeschalteten Spannungsquelle jeweils sprungartig auf ihre Leerlaufspannung ansteigt.

## Patentansprüche

1. Elektrische Spannungsversorgung (1) mit mindestens zwei Spannungsquellen (2a, 2b, 2c) zum Speisen von Ausgangsanschlüssen (3a, 3b), und mit einer Regelschaltung zum Regeln einer an den Ausgangsanschlüssen (3a, 3b) anliegenden Ausgangsspannung (Uₒᵤₜ), wobei die Regelschaltung für jede Spannungsquelle (2a, 2b, 2c) jeweils ein Stellglied aufweist, das einen Strompfad hat, über den ein Anschluss der betreffenden Spannungsquelle (2a, 2b, 2c) mit einem Ausgangsanschluss verbindbar ist, wobei jedes Stellglied jeweils einen Stellsignaleingang zum Einstellen der elektrischen Leitfähigkeit seines Strompfads aufweist, wobei die Regelschaltung einen Regler hat, dem die Ausgangsspannung (Uₒᵤₜ) und ein Sollspannungssignal zugeführt werden, wobei der Regler derart mit den Stellsignaleingängen der Stellglieder zusammenwirkt, dass beim Auftreten einer Abweichung zwischen der Ausgangsspannung und dem Sollspannungssignal die Ansteuerung mindestens eines Stellsignaleingangs im Sinne einer Reduzierung der Abweichung verändert wird, und wobei die Stellsignaleingänge mit einer Ansteuereinrichtung verbunden sind, die derart ausgestaltet ist,
- dass der Strompfad mindestens eines Stellglieds für die Ansteuerung durch den Regler freigegeben ist, wenn der an den Ausgangsanschlüssen (3a, 3b) entnommene Ausgangsstrom (I) in einem vorbestimmten, dem betreffenden Stellglied zugeordneten Wertebereich liegt, und
- dass der Strompfad gesperrt ist, wenn der an den Ausgangsanschlüssen (3a, 3b) entnommene Ausgangsstrom (I) nicht in dem vorbestimmten Wertebereich liegt.

2. Elektrische Spannungsversorgung (1) nach Anspruch 1, **dadurch gekennzeichnet, dass** die Spannungsquellen (2a, 2b, 2c) Brennstoffzellen sind.

3. Elektrische Spannungsversorgung (1) nach Anspruch 1 oder 2, **dadurch gekennzeichnet, dass** die Stellglieder Feldeffekttransistoren (7a, 7b, 7c) sind, die jeweils mit ihrer Source mit einem Anschluss einer Spannungsquelle (2a, 2b, 2c) und mit ihrer Drain mit einem Ausgangsanschluss (3a) der Spannungsversorgung (1) verbunden sind, dass der Regler einen Operationsverstärker (4) aufweist, der mit einem ersten Operationsverstärkereingang mit dem Ausgangsanschluss der Spannungsversorgung (3a) und mit einem zweiten Operationsverstärkereingang mit einem Geber (5) für das Sollspannungssignal verbunden ist, und dass ein Ausgang (6) des Operationsverstärkers (4) über die Ansteuereinrichtung mit den die Stellsignaleingänge bildenden Gateanschlüssen der Feldeffekttransistoren (7a, 7b, 7c) verbindbar ist.

4. Elektrische Spannungsversorgung (1) nach einem der Ansprüche 1 bis 3, **dadurch gekennzeichnet, dass** die Ansteuereinrichtung eine Schalteranordnung aufweist, die einen mit dem Ausgang (6) des Operationsverstärkers (4) verbundenen Eingang und mehrere Ausgänge aufweist, die jeweils mit einem Stellsignaleingang eines Stellglieds verbunden sind, dass die Schalteranordnung einen Adresseingang (9) hat, mittels dem der Eingang der Schalteranordnung durch Anlegen eines Adressierungssignals wahl- oder wechselweise mit jedem Ausgang der Schalteranordnung verbindbar ist, und dass der Adresseingang (9) mit einer Ansteuerlogik verbunden ist.

5. Elektrische Spannungsversorgung (1) nach einem der Ansprüche 1 bis 4, **dadurch gekennzeichnet, dass** die Ansteuerlogik ein Schieberegister (10) aufweist, das mit seinem Registerausgang mit dem Adresseingang (9) der Schalteranordnung verbunden ist, dass in dem Schieberegister (10) zumindest eine der Anzahl der einzustellenden Zustände der Schalteranordnung entsprechende Anzahl Steuerwörter (11a, 11b, 11c, 11d) abgelegt ist, die für jeden zu sperrenden bzw. freizugebenden Strompfad jeweils zumindest ein Bit aufweisen, dass das Schieberegister (10) mindestens einen Steuereingang (12a, 12b) für ein Schiebetaktsignal aufweist, mittels dem die Steuerwörter (11 a, 11b, 11c, 11d) nacheinander am Registerausgang ausgebbar sind, und dass der mindestens eine Steuereingang (12a, 12b) mit einem Schiebetaktsignalgenerator (13) verbunden ist, der derart mit dem Ausgang (6) des Operationsverstärkers (4) in Steuerverbindung steht, dass das am Registerausgang ausgegebene Steuerwort (11a, 11b, 11c, 11d) in Abhängigkeit von der Belastung der elektrischen Spannungsversorgung (1) ausgewählt wird.

6. Elektrische Spannungsversorgung (1) nach einem der Ansprüche 1 bis 5, **dadurch gekennzeichnet, dass** sie eine Messeinrichtung zur Erfassung eines von dem in dem Strompfad mindestens eines Stellglieds fließenden Quellenstroms abhängigen Messsignals aufweist, dass der Schiebetaktsignalgenerator (13) mindestens einen Komparator (14a) aufweist, der mit einem ersten Komparatoreingang mit einem Messsignalausgang der Messeinrichtung, mit einem zweiten Komparatoreingang mit einem Referenzsignalgeber und mit einem Komparatorausgang mit dem Steuereingang des Schieberegisters (10) verbunden ist, und dass der Steuereingang des Schieberegisters (10) flankengesteuert ist.

7. Elektrische Spannungsversorgung (1) nach einem der Ansprüche 1 bis 6, **dadurch gekennzeichnet, dass** der Messsignalausgang durch den Ausgang (6) des Operationsverstärkers (4) gebildet ist oder über einen Spannungsteiler mit diesem verbunden ist.

8. Elektrische Spannungsversorgung (1) nach einem der Ansprüche 1 bis 7, **dadurch gekennzeichnet, dass** die Messeinrichtung mindestens einen Strommesser zur Messung eines in dem Strompfad mindestens eines Stellglieds fließenden Stroms aufweist.

9. Elektrische Spannungsversorgung (1) nach einem der Ansprüche 1 bis 8, **dadurch gekennzeichnet, dass** die Messeinrichtung mindestens einen Temperatursensor aufweist, der zur Messung der Temperatur einer Spannungsquelle (2a, 2b, 2c) ausgestaltet ist.

10. Elektrische Spannungsversorgung (1) nach einem der Ansprüche 1 bis 9, **dadurch gekennzeichnet, dass** der Schiebetaktsignalgenerator (13) mindestens einen Komparator (14a) aufweist, der mit einem ersten Komparatoreingang direkt oder indirekt vorzugsweise über einen Spannungsteiler mit einem der Ausgangsanschlüsse (3a, 3b), mit einem zweiten Komparatoreingang mit einer Referenzspannungsquelle und mit einem Komparatorausgang mit dem Steuereingang des Schieberegisters (10) verbunden ist, und dass der Steuereingang des Schieberegisters (10) flankengesteuert ist.

11. Elektrische Spannungsversorgung (1) nach einem der Ansprüche 1 bis 10, **dadurch gekennzeichnet, dass** die Referenzspannungsquelle eine Verstelleinrichtung zu Einstellen der Referenzspannung aufweist.
